# EUROPEAN PATENT SPECIFICATION

(11) **EP 1 859 498 B1**
(45) Date of publication and mention of the grant of the patent: **16.04.2014**
(21) Application number: 05854614.4
(22) Date of filing: 15.12.2005
(51) Int. Cl.: H01M 8/04, H01M 8/10

(54) **METHOD AND DEVICE TO IMPROVE OPERATION OF A FUEL CELL**
VERFAHREN UND EINRICHTUNG ZUR VERBESSERUNG EINER BRENNSTOFFZELLE
PROCEDE ET DISPOSITIF POUR AMELIORER LE FONCTIONNEMENT D'UNE PILE A COMBUSTIBLE

(30) Priority: 24.01.2005 US 43917
(43) Date of publication of application: 28.11.2007
(73) Proprietor: Gore Enterprise Holdings, Inc., Newark, DE 19714-9206 (US)
(72) Inventor: MURTHY, Mahesh, Newark, DE 19702 (US); SISOFO, Nicholas, T., III, Bear, DE 19701 (US); BACZKOWKI, Carole, A., Elkton, MD 21921 (US)
(74) Representative: Shanks, Andrew
(86) International application number: PCT/US2005/045937
(87) International publication number: WO 2006/081009

(56) References cited:
- WO-A2-2005/048377
- WO-A2-2005/071779
- US-A1- 2002 071 980
- US-A1- 2003 224 226
- US-B1- 6 576 356
- US-B1- 6 805 983
- US-B1- 6 805 983

## Description

### FIELD OF THE INVENTION

An invention and method of conditioning a fuel cell or cells to improve operation of said cell or cells.

### BACKGROUND OF THE INVENTION

Fuel cells are devices that convert fluid streams containing a fuel, for example hydrogen, and an oxidizing species, for example, oxygen or air, to electricity, heat and reaction products. Such devices comprise an anode, where the fuel is provided; a cathode, where the oxidizing species is provided; and an electrolyte separating the two. The fuel and/or oxidant can be a liquid or gaseous material. The electrolyte provides an ionic pathway for the ions to move between the anode, where the ions are produced by reaction of the fuel, to the cathode, where they are used to produce the product. The electrons produced during formation of the ions are used in an external circuit, thus producing electricity.

A Polymer Electrolyte Membrane (PEM) fuel cell is a type of fuel cell where the electrolyte is a polymer electrolyte. Other types of fuel cells include Solid Oxide Fuel Cells (SOFC), Molten Carbonate Fuel Cells (MCFC), Phosphoric Acid Fuel Cells (PAFC), etc. As with any electrochemical device that operates using fluid reactants, unique challenges exist for achieving both high performance and long operating times. In order to achieve high performance it is necessary to reduce the electrical and ionic resistance of components within the device. Recent advances in the polymer electrolyte membrane have enabled significant improvements in the power density of PEM fuel cells. As is well known in the art, decreasing the thickness of the polymer electrolyte membrane can reduce the membrane ionic resistance, thus increasing fuel cell power density. Within this application power density is defined as the product of the voltage and current in the external circuit divided by the geometric area of the active area in the cathode. The active area is the area in which the catalyst exposed to the fuel and oxidant.

However, reducing the membranes physical dimensions can increase the susceptibility to damage from other device components leading to shorter cell lifetimes. Various improvements have been developed to mitigate this problem. For example, in US Patent No. RE 37,307 to Bahar et al*,* the polymer electrolyte membrane is reinforced with a porous reinforcement to increase its strength. Although this approach is successful in improving cell performance and increasing lifetimes, higher power density would be even more desirable.

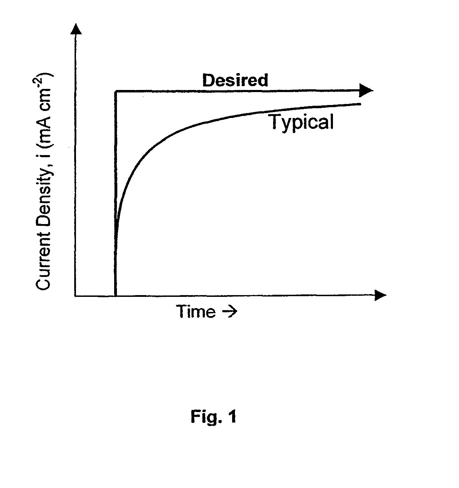

Although there have been many improvements to fuel cells in an effort to improve power density, most have focused on using materials that improve performance. Very few have focused on specific operational methods or devices that would act with a given set of materials to maximize power density given those materials. It is well known in the art that after assembling either a single cell, i.e., a cell with only a single anode and cathode, or a fuel cell stack, i.e, a number of single cells connected together, typically in series, that there is a period of "break-in" required when the cell or stack performance improves with operation. Ideally, one would like to have the highest possible power output immediately after assembly as shown in Figure 1 , in the curve labeled "Desired". In practice, though, the power output initially is lower, and improves with time for a period of time as shown in Figure 1, in the curve labeled "Typical". Generally, a practitioner will therefore "break-in" the cell for a period of time monitoring the power density, or as is more easily achieved in practice, the current density at a given fixed voltage, until it stops increasing. At this point, the cell is "broken-in" and ready to operate under normal use conditions. Ideally, not only would one like to have the highest possible power density after the break-in procedure, but one would also like to have the time to reach this point to be as short as possible. The shorter this "break-in" time, the sooner the cell or stack can operate for its intended purpose.

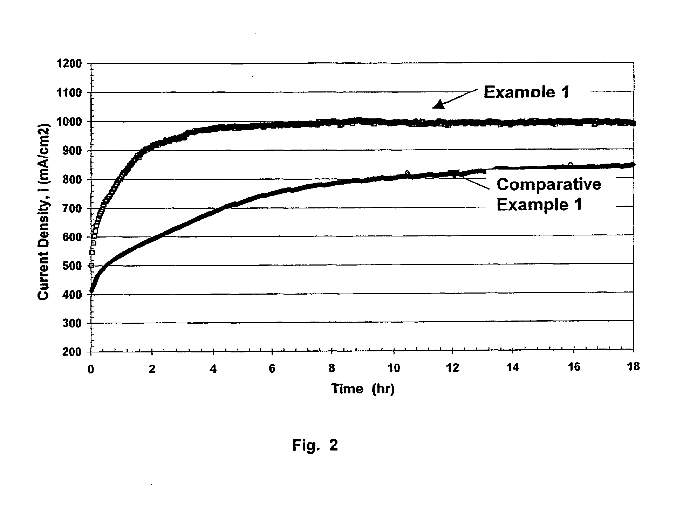

There is no standard measurement established in the prior art to determine the effectiveness of break-in or conditioning procedures. In this application, we will the use the following: the output current density at 0.6 volts of a fuel cell is monitored and recorded as a function of time during the application of a given break-in procedure. After 18 hours, the power density at 0.6 volts is calculated from a polarization curve. This power density can then be used as a means of comparison between cells that have been conditioned with various procedures. The higher the value, the better the conditioning procedure. To measure the break-in time, two values are calculated from the recorded current density at 0.6 volts versus time. The first is the time required to reach 75% of the current density achieved at 18 hours. The second is the time required to reach 90% of the current density achieved at 18 hours. Better break-in or conditioning procedures will give shorter times. An illustration of these measurements is shown in Figure 2, and complete details of the measurement protocols are given below.

The specific conditioning or break-in procedures used among practitioners in the art varies, ranging from performing a number of polarization curves on the newly assembled cell or stack, to applying an external load to the cell and holding the voltage or current constant for a fixed period of time. Also known in the art are conditioning regimes where the voltage or current is varied during break-in, the cell is short circuited once or many times, and an elevated temperature and/or pressure is/are applied to the cell.

After break-in is completed and the fuel cell or stack is operating under normal conditions, the power density typically decreases as the cell or stack continues to operate. This decrease, described by various practitioners as voltage decay, fuel cell durability, or fuel cell stability, is not desirable because less useful work is obtained as the cell ages during use. Ultimately, the cell or stack will eventually produce so little power that it is no longer useful at all. Therefore, it would be highly desirable if during operation, a procedure to recover the "lost" power could be used. Although it has been recognized that after removing the external load from a cell or stack that some recovery occurs naturally, approaches specifically designed to recover performance would be very valuable.

### SUMMARY OF THE INVENTION

According to a first aspect of the present invention there is provided a method of conditioning a polymer electrolyte membrane fuel cell having an anode supplied with a fuel, and a cathode supplied with an oxidant comprising the following steps performed before operation of the fuel cell: (i) applying a first external load to said fuel cell, the first external load being selected to produce a first voltage, about 0.6 volts for a first period of time between about 5 seconds and about 120 seconds; (ii) removing the said first external load for a second period of time between about 5 seconds and about 120 seconds; (iii) applying a second external load to said fuel cell, the second external load being selected to produce a second voltage, about 0.3 volts for a third period of time between about 5 seconds and about 120 seconds; (iv) removing said second external load for a fourth period of time between about 5 seconds and 120 seconds; and (v) repeating steps i through iv at least twice.

Process steps i through iv may be repeated at least twice, or at least thrice. Further, the methods may be performed when said fuel comprises hydrogen, or methanol.

The methods described may be applied during the first about 24 hours of operation of said fuel cell, or alternatively after about 24 hours of operation.

Another described method is a method of conditioning a polymer electrolyte membrane fuel cell having an anode, a cathode, and an electrolyte comprising a polymer having an anode supplied with a fuel, and a cathode supplied with an oxidant comprising the steps of: (i) to (iv), further comprising applying liquid water to the fuel cell during any of steps (i) to (iv).

Also described is a method of conditioning a polymer electrolyte membrane fuel cell having an anode, a cathode, and an electrolyte comprising a polymer having an anode supplied with a fuel, and a cathode supplied with an oxidant comprising the steps of: (i) to (iv) and further comprising the step of applying a fuel pressure of greater than about 108 kPa (one psig) to the anode, and an oxidant pressure similar to said fuel pressure to the cathode. Said application of a fuel and oxidant pressure may occur during steps (i)to (iv).

Another described method is a method of conditioning a polymer electrolyte membrane fuel cell having an anode, a cathode, and an electrolyte comprising a polymer having an anode supplied with a fuel, and a cathode supplied with an oxidant comprising the steps of: (i) to (iv), further comprising maintaining the fuel cell at a temperature of between about 60°C and about 90°C during any of steps (i) through (iv).

The present invention is a distinct improvement over conditioning procedures previously known both because of the higher power density obtained and because of the shorter time required to reach the higher power density. Such improvements will improve fuel cell manufacturing times by decreasing the time required for quality control testing. Additional application areas for fuel cells will be possible because of the higher power density. Finally, when used during fuel cell operation as a recovery procedure, the improved recovery will allow the fuel cells to operate longer in actual operation, thereby greatly and broadly increasing their utility.

### DESCRIPTION OF THE DRAWINGS

The operation of the present invention should become apparent from the following description when considered in conjunction with the accompanying drawings, in which:
Figure 1 is a schematic of the voltage produced by a fuel cell versus time during break-in showing typical results and the ideal or desired behavior.
Figure 2 compares the observed current density with time for break-in following the instant invention, and a break-in procedure according to prior art.
Figure 3 is a schematic of a membrane electrode assembly.

### DETAILED DESCRIPTION OF THE INVENTION

The instant invention is a method of conditioning a polymer electrolyte membrane (PEM) fuel cell. Such PEM fuel cells comprise an anode, a cathode and a polymer electrolyte sandwiched between them. The polymer used as a polymer electrolyte comprises a polymer containing ionic acid functional groups attached to the polymer backbone, wherein said ionic acid functional groups are selected from the group of sulfonic, sulfonimide and phosphonic acids; and optionally further comprises a fluoropolymer. Said polymer may be selected from the group containing perfluorosulfonic acid polymers, polystyrene sulfonic acid polymers; sulfonated Poly(aryl ether ketones); and polymers comprising phthalazinone and a phenol group, and at least one sulfonated aromatic compound. The polymer may also comprise expanded polytetrafluoroethylene. Said expanded polytetrafluoroethylene may be a membrane having a porous microstructure of polymeric fibrils and optionally nodes; an ion exchange material impregnated throughout the membrane, wherein the ion exchange material substantially impregnates the membrane to render an interior volume of the membrane substantially occlusive. A particularly preferable polymer membrane is one prepared according to Bahar, et. al. as described in RE 37,307.

The anode and cathode electrodes comprise appropriate catalysts that promote the reduction of fuel (e.g., hydrogen) and the oxidation of the oxidant (e.g., oxygen or air), respectively. For example, for PEM fuel cells, anode catalysts may include, but are not limited to, pure noble metals, for example Pt, Pd or Au; as well as binary, ternary or more complex alloys of said pure noble metals. Pure R is particularly preferred for the anode when using pure hydrogen as the fuel. Pt-Ru alloys are particularly preferred catalysts when using reformed gases as the fuel. Pure Pt is a preferred catalyst for the cathode in PEM fuel cells. Non-noble metal alloys catalysts are also used, particularly in non-PEM fuel cells, and as the temperature of operation increases. The anode and cathode may also, optionally, include additional components that enhance the fuel cell operation. These include, but are not limited to, an electronic conductor, for example carbon, and an ionic conductor, for example a perfluorosulfonic acid based polymer. Additionally, the electrodes are typically porous as well, to allow gas access to the catalyst present in the structure.

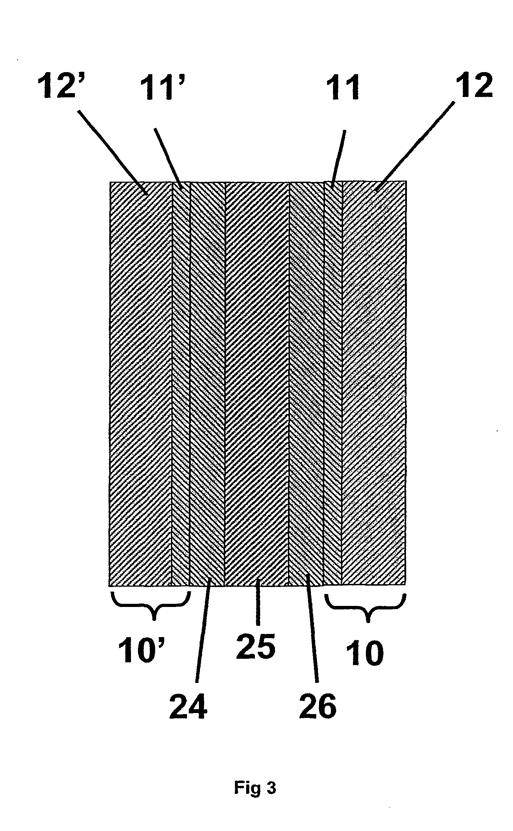

PEM fuel cells, shown schematically in Fig. 3, as used herein may include a membrane electrode assembly (MEA) comprising an anode 24, a cathode 26 and an electrolyte 25, and optionally, gas diffusion layers 10 and 10' (GDM), preferably comprising carbon, and optionally, a bipolar plate for distributing the gas across the active area (not shown in Fig. 3). The GDM may also optionally be comprised of a macrolayer 12 and 12', and a microlayer 11 and 11'. Additionally, such PEM fuel cells may also optionally comprise stacks comprising a series of MEAs, GDMs and bipolar plates, or any combination thereof. The conditioning procedures described below may be applied to these PEM fuel cells to produce an MEA or fuel cell that has been conditioned before its final use in a power producing fuel cell module.

The temperature of operation of the fuel cell varies depending on the type of cell, the components used, and the type of fuel. For example, PEM fuel cells typically operate at temperatures between about room temperature and about 150°C.

Inventors have discovered, surprisingly, that by using a specific conditioning procedure detailed below on a fuel cell that power density can be increased, and break-in time reduced. The method applies to the conditioning of a fuel cell having an anode supplied with a fuel, and a cathode supplied with an oxidant. It comprises the steps of: (i) applying a first external load to said fuel cell, the first external load being selected to produce a first voltage, about 0.6 volts for a first period of time between about 5 seconds and about 120 seconds; (ii) removing the said first external load for a second period of time between about 5 seconds and about 120 seconds; (iii) applying a second external load to said fuel cell, the second external load being selected to produce a second voltage, about 0.3 volts for a third period of time between about 5 seconds and about 120 seconds; (iv) removing said second external load for a fourth period of time between about 5 seconds and 120 seconds; and (v) repeating steps i through iv at least twice. The conditioning procedure can be used initially after assembling the cell, for example during the first about 24 hours of operation of the fuel cell, wherein it is called herein a "break-in" procedure. The conditioning procedure can also be used after the fuel cell has been operating for a period of time, for example at any time greater than about 24 hours up until the cell is permanently shutdown or otherwise fails. The steps (i) through (iv) are repeated twice, thrice or, many times over an extended period of time, for example for many hours. In order to minimize the total cycle time, it may be preferable to minimize said first, second, third and fourth periods of time.

The above conditioning procedure comprising steps (i) through (iv) may also be combined with other conditioning steps known in the art. These include, but are not limited to using elevated temperatures; elevated pressures; performing a so-called hydrogen pump, where hydrogen is applied to the anode and cathode then the cell operated so hydrogen is generated alternatively at the anode and cathode; or any combination of the above.

Additionally, inventors have discovered that a method comprising the application of liquid water to a PEM fuel cell at elevated temperature surprisingly also increases power density and decreases break-in time. In this embodiment, a PEM fuel cell or MEA is held at an elevated temperature in the presence of liquid water for a period of time. Said period of time can vary between a 1-2 minutes and, many hours, and for example, greater than about 6 hours. Said liquid water can be applied using any of numerous methods known in the art. For example, the MEA may be soaked in elevated temperature water. Alternatively, one may saturate a non-reacting gas by passing it through a water bottle held at a temperature above the temperature of the PEM fuel cell. The non-reacting gas can be an inert gas such as He or Ar, or, a less expensive non-reacting gas, such as nitrogen. The said elevated temperature in this process is chosen to be higher than the expected operating temperature of the MEA or PEM fuel cell, preferably by 10 to 30°C. For example, if the operating temperature of the cell is expected to be 70°C, the break-in elevated temperature soak in the presence of liquid water will be performed at 80 - 100°C, for example, at 90°C. In this latter case, using the method described above, the water bottle temperature must be above 90°C, for example at 95°C. As is well known in the art, care must be taken when using this procedure to prevent condensation in all the incoming lines to the cell by heating said lines to at, or slightly above the bottle temperature. This may also be combined with one or more additional break-in steps, including but not limited to any of those described above.

### EXAMPLES

The following procedures and methods were used in the examples that follow.

### Cell Hardware and Assembly

For all examples, a standard 25 cm² Active Area (AA) hardware (Fuel Cell Technologies, Inc.) was used for membrane electrode assembly (MEA) performance evaluation. This hardware is henceforth referred to as "standard hardware" in the rest of this application. The standard hardware consisted of graphite blocks with triple channel serpentine flow fields on both the anode and cathode sides. The path length is approximately 560 mm and the groove dimensions are 0.69 mm width and 0.84 mm depth respectively. Every cell was assembled with a 0.175 - 0.275 mm silicone gasket with a square window of 5.0 cm X 5.0 cm, and a 0.025 mm polyethylene napthalate (PEN) film (available from Tekra Corp., Charlotte, NC.) PEN gasket, referred to as the 'sub-gasket', with an open window of 4.8 X 4.8 cm on both the anode and cathode sides. The thickness of the silicone gasket was chosen for each cell to maintain approximately the same compression in each cell after assembly. Each cell was assembled with CARBEL(TM) CL gas diffusion medium (GDM, available from W. L. Gore & Associates, Inc., Newark, DE) with a nominal thickness of 0.41 mm on both the anode and cathode sides. This type of GDM is henceforth referred to as "standard GDM" in the rest of this application. Three types of MEAs were used to study the effects of break-in protocol on MEA performance: PRIMEA(R) MEA Series 5510, 5561 and 5621, all from W.L. Gore & Associates, Inc. The MEA is assembled dry in all cases in the fuel cell. The dry state in this context refers to equilibrium at room temperature at a relative humidity (RH) of 20 to 30 %. Cell hardware was assembled with the gasket, sub-gasket, and GDM layers on either side of the MEA. Eight bolts were used and the cell was compressed by tightening the bolts until a final bolt torque of 5.1 Nm (45 in-lb/bolt) was attained. In order to ensure consistency in cell assembly, the bolts were lubricated with Krytox(R) lube. The thickness of the gasket and sub-gasket were chosen so that an average GDM compression of 35 % could be attained using this GDM. This average compression was necessary to ensure a good electrical contact between the different layers within the active area of the MEA while not significantly compromising the porosity within the diffusion layer. This assembly procedure is henceforth referred to as the 'standard' cell assembly. The cell is heated using cartridge heaters and cooled with natural convection, i.e., no external coolant or cooling manifold is provided in this design.

### Fuel Celt Test Station Description

Two different fuel cell test systems were used to evaluate the performance. We distinguish these systems as System A (Globe Tech Station) and System B (Teledyne Medusa™ Station). System B is designed for much more precise control of RH of both the fuel and the oxidant. System A on the other hand has an older design with lower humidification efficiency. Therefore, target relative humidities need to be attained by raising the humidifier temperatures 5 to 10°C above the desired dew point. Also, another difference is that System A allows for liquid water to be entrained into the gas stream. The effect of liquid water will be treated separately and is shown to be a variable in some of the examples discussed below.

### Cell Start-up and Description of Break-in Protocols

After cell assembly using the procedure outlined above and connecting the cell to either of the two systems described above, the cell was started under different operating conditions. For all the protocols described below, the cell temperature was set at 70°C or 80°C. All experiments were conducted either at ambient pressure or 103 kPa (15 psig) equally applied to both the anode and cathode chambers. The humidifiers were set at 80°C and 75°C on the anode and cathode sides for System A. These set points assure a dew point close to 70°C. This doesn't count for the liquid water being carried in the gas stream. Since System B has a superior humidification design, the humidifiers were set to obtain a dew point of 70°C on the anode and cathode sides. All cells were started with fuel and oxidant after the humidifiers and cell temperatures reached their predetermined set-points as mentioned above. The fuel was laboratory pure hydrogen. The oxidant in all cases was air. For all experiments the hydrogen gas stoichiometry was set at 1.2 and the air stoichiometry was set at 2.0. As used herein, stoichiometry is defined as a ratio of the actual gas flow rate divided by the flow rate needed to provide enough gas to exactly maintain complete reaction at any given current in the cell. For example, a hydrogen gas stoichiometry of 1.2 on the anode means that the flow of hydrogen is 1.2 times that needed for complete reaction of all the hydrogen at the operating current of the cell. The different conditioning procedures are described in more detail below.

### Measurement Protocols

The power density at 0.6 volts is defined as the power density at 0.6 volts measured at 70°C, and 0 kPa (0 psig) and 100% RH after break-in for 18 hours using any of the said protocols shown in Table 1. It is calculated as follows: a polarization curve is recorded in the following sequence of steps:
a. The cell is held at 0.6 volts for 10 min and the current density is measured every 6 seconds from the 9th minute.
b. The current density is fixed for 3 min in the following order: 1200, 1400, 1600, 1800, 1200 mA cm⁻² and cell voltage data is collected every 6 seconds.
c. The cell is set at 1 volts for 15 seconds.
d. The current density is set at 1000 mA cm⁻² for 4 minutes and the cell voltage is measured every 6 seconds from the 2nd minute.
e. The current density is fixed for 3 minutes in the following order: 800, 700, 500, 250, 100, and 1200 mA cm⁻² and the cell voltage data is collected every 6 seconds.
f. The cell is set at 0.6 volts for 3 min and the current density values are recorded every 6 seconds during the 3rd minute.

The power density is then calculated by multiplying the average of the current densities measured in step (f) and (a) by 0.6 to obtain a value in mW cm⁻².

The break-in time is defined as the time to reach a current density of either 75% or 90% of the current density at 0.6 volts measured at 18 hours. To illustrate this calculation, an example of the recorded data is shown in Figure 2 for Example 2 and Comparative Example 1. The current density measured at 0.6 volts after 18 hours for Example 1 was found to be 990 mA cm⁻². Ninety and 75% of this value is 891 and 742 mA cm⁻², respectively. From the current density versus time trace in Figure 2, the time to reach 891 and 742 mA cm⁻² was ∼ 1.7 and ∼ 0.64 hours, respectively. (The value for the 90% break-in time shown in Table 1 for Example 2 is slightly higher than 1.7 hours because the value in Table 1 is an average of multiple tests, only one of which is shown in Figure 2). Correspondingly, for Comparative Example 1, the current density at 0.6 volts after 18 hours was 845 mA cm⁻². Ninety and 75% of this value is 760 and 634 mA cm⁻², respectively. The time to reach these values is ∼ 6.4 and ∼ 2.9 hours, respectively. Both of these times for Example 1 are shorter than the corresponding times for Comparative Example 1, so the break-in procedure of Example 1 is more desirable.

In all Tables, the break-in conditions are illustrated (the cell temperature, pressure, and voltage cycling mode). For the case with no cycling, the comparative example, the cell potential was held constant at 0.6 volts for 18 hours. Two types of cycling were used in these examples, designated rapid, and slow. The details of these two cycles are described in detail below, but each was repeated multiple times if required to reach the total time of break-in (or conditioning) application.

The cycling procedure designated as slow was performed as follows: the cell was started with H2 and Air until a stable open circuit voltage (OCV) was attained. After about 2 to 5 minutes the external load was changed to bring the cell to 0.6 volts where it was held for 15 min. Then, the external load was changed to bring the cell to 0.99 volts and held there for 1 minute. Then the external load was changed again to bring the cell to 0.3 volts and held there for 15 min. Then, the external load was removed, and the cell was allowed to remain at open circuit voltage for one minute. This multi-step cycle was repeated for 6 hours, after which a polarization curve was recorded. After completion of the polarization curve the above cycle was continued for another 12 hours and finally a second polarization curve was recorded.

For the rapid cycling protocol, the cell was started with H₂ and air flows to the anode and cathode, respectively, until a stable open circuit voltage (OCV) was attained. After about 2 to 5 minutes the external load was changed to bring the cell voltage to 0.6 volts where it was held for 30 s. Then the external load was removed to bring the cell to open circuit voltage, where it was held for 30 s. The external load was changed again to bring the cell to 0.3 volts, where it was held for 30 s. Then, the external load was removed, and the cell was allowed to remain at open circuit voltage for thirty seconds. This multi-step cycle was repeated continually for a total time of 6 hours, after which a polarization curve was recorded. After completion of the polarization curve the same cycling procedure was repeated for another 12 hours and a second polarization curve was recorded. The total time that the cycling protocol was applied to the cell was the same for both these "standard" slow and rapid procedures, i.e., 18 hours. In some cases, as noted below in the examples, the total time that the cycling protocol was applied was varied, with a time shorter than 18 hours being used.

The procedure described by the rapid cycling protocol is the preferred procedure.

The power density was calculated based on the current density at 0.6 volts measured at 18 hours using the polarization curve procedure described above. For the data described in the following Tables, the average power density and one times the standard deviation (1 SD) are recorded based on at least three replicates. Likewise, the average break-in time and 1 SD based on the time to reach 75% or 90% of the current density are listed for the various examples described below.

### Description of Membrane Electrode Assembly (MEA):

Three types of PRIMEA^{®} Membrane Electrode Assemblies (MEAs) obtained from W.L. Gore & Associates, Inc. were used: PRIMEA^{®} MEA Series 5510, PRIMEA^{®} MEA Series 5561 and PRIMEA^{®} MEA Series 5621. The PRIMEA^{®} Series 5510 MEAs used a 25 µm GORE-SELECT^{®} membrane and 0.4 mg cm⁻² Pt as catalyst on the anode and cathode. The Series 5561 MEAs used a 25 µm GORE-SELECT^{®} membrane, with 0.45 mg cm⁻² Pt-Ru as anode and 0.4 mg cm⁻² Pt cathode. The Series 5621 MEAs used a 35 µm GORE-SELECT^{®} membrane, 0.45 mg cm⁻² Pt-Ru as anode and 0.6 mg cm⁻² Pt as cathode.

### Examples 1-8:

A series of tests were performed using PRIMEA^{®} Series 5621 with standard GDM, standard cell hardware and System A test station. In all cases, hydrogen gas was used as the fuel and the flow rate to the anode was set to a stoichiometry of 1.2. The oxidant was air and the flow rate to the cathode was set to a stoichiometry of 2.0. Further, the relative humidity of both the gases at the inlet was set at 100%. The pressure applied to the anode and cathode, cell temperature and type of cycling were varied in these examples as shown in Table 1, as are the resulting power density at 0.6 volts and break-in times. In some cases, multiple tests were performed under the same conditions. In those cases, an average of the resultant power density at 0.6 volts and break-in times is shown. In those cases where 3 or more tests were performed at a given condition the standard deviation of the measured values was also determined, and plus or minus one standard deviation is reported in the Table. Fig. 2 shows the measured current density at 0.6 volts as a function of time for Example 2 and for Comparative Example 1 showing that the inventive method of Example 2 has both a higher power density at 0.6 volts, and a shorter break- in time.

### Comparative Example 1

Illustrative of prior art, the power density at 0.6 volts and break-in time for 5621 MEAs was determined by using a break-in procedure where the cell was held at 0.6 volts for 18 hours using standard GDM, standard cell hardware and System A test station, relative humidity of the inlet gases set to 100%, cell temperature of 70°C, and stoichometries of the hydrogen fuel and air oxidant of 1.2 and 2.0 respectively. Thus, this comparative example is the same in all respects to Examples 1 and 2 except the test was done using a prior-art break-in procedure. The power density for this case is 507 mW cm⁻² and the break-in time is 6.38 hours (90%) and 2.88 hours (75%). These values can be compared in Table 1 to those obtained with break-in procedures of Example 1 and 2. Both the slow (Example 1) and rapid cycling (Example 2) have higher power density at 0.6 volts and shorter break-in times than those found for this Comparative Example. Fig. 2 further illustrates the advantage of the method compared to this Comparative Example by showing measured current density as a function of time for Example 1 compared to that observed for this Comparative Example. The power density at 0.6V is higher, and break-in time is shorter for the method.

**Table 1**

| | Cell Temperature (°C) | Pressure kPa (psig) | Voltage Cycling Type | Power Density at 0.6 volts (m/Wcm²)* | 90% Break-in Time (h) * | 75% Break-in Time (h)* |
|---|---|---|---|---|---|---|
| Ex 1 | 70 | 0 (0) | Slow | 610 ± 11 | 2.88 ± 0.53 | 1.32 ± 0.31 |
| Ex 2 | 70 | 0 (0) | Rapid | 650 ± 20 | 1.98 ± 0.26 | 0.64 ± 0.12 |
| Ex 3 | 70 | 103 (15) | Slow | 618 ± 4 | 1.10 ± 0.12 | 0.40 ± 0.14 |
| Ex 4 | 70 | 103 (15) | Rapid | 659 | 0.27 | 0.00 |
| Ex 5 | 80 | 0 (0) | Slow | 600 ± 47 | 3.58 ± 0.99 | 1.45 ± 0.42 |
| Ex 6 | 80 | 0 (0) | Rapid | 591 | 1.10 | 0.27 |
| Ex 7 | 80 | 103 (15) | Slow | 630 | 0.88 | 0.38 |
| Ex 8 | 80 | 103 (15) | Rapid | 710 ± 48 | 0.61 ± 0.20 | 0.12 ± 0.11 |
| Com Ex 1 | 70 | 0 (0) | None | 507 | 6.38 | 2.88 |

| | | | | | | |
|---|---|---|---|---|---|---|
| * Where error values are shown, they are presented as ± one standard deviation. | | | | | | |

### Examples 9-12:

Examples 9-12 shows the results with 5561 and 5510 MEAs using conditions listed in Ex 2 and Ex 8 as shown in Table 1. The cell was built with standard hardware and gas diffusion medium. Again, System A type test station was used to generate the experimental data. The break-in procedures thus are effective for all three types of MEAs used in Table 1 and 2.

**Table 2**

| | Electrode Type | Cell temp (°C) | Pressure kPa (psig) | Voltage cycling type | Power Density at 0.6 volts (mW/cm²) | 90% Break-in time (h) | 75% Break-in Time (h) |
|---|---|---|---|---|---|---|---|
| Ex.9 | 5561 | 70 | 0 (0) | Slow | 684 ± 6 | 1.43 ± 0.60 | 0.70 ± 0.14 |
| Ex 10 | 5561 | 80 | 103 (15) | Rapid | 741 ± 35 | 0.53 ± 0.27 | 0.10 ± 0.10 |
| Ex 11 | 5510 | 70 | 0 (0) | Slow | 662 ± 9 | 1.88 ± 0.10 | 0.72 ± 0.26 |
| Ex 12 | 5510 | 80 | 103 (15) | Rapid | 738 ± 24 | 1.50 ± 0.44 | 0.48 ± 0.26 |

### Examples 13-14 and Comparative Example 2:

Examples 13 and Ex 14 show the data when reformate fuel with a 4% air-bleed is used as the fuel instead of pure hydrogen. Comparative Example 2 is under identical conditions but with no type of voltage cycling. These examples illustrate that the break-in procedure is effective with alternative fuels other than pure hydrogen.

**Table 3**

| | Electrode Type | Cell temp (°C) | Pressure kPa (psig) | Voltage cycling type | Power Density at 0.6 volts (mW/cm²) | 90% Break-in time (h) | 75% Break-in Time (h) |
|---|---|---|---|---|---|---|---|
| Ex 13 | 5561 | 70 | 0 (0) | Slow | 417 | 3.2 | 1.3 |
| Ex 14 | 5561 | 70 | 0 (0) | Rapid | 447 | 3.1 | 1.0 |
| Comp Ex 2 | 5561 | 70 | 0 (0) | None | 396 | 7.9 | 3.8 |

### Examples 15-18:

The effect of the presence of liquid water during the break-in procedures is shown in these examples. All cells were assembled with 5621 MEAs. The MEAs were conditioned using the conditions shown in Table 4. Thus, the only difference between Examples 15 and 16, and between Examples17 and 18 is the presence of liquid water introduced during the break- in process. The presence of liquid water increases the power density at 0.6V and decreases the break-in time when compared to the same procedure when no liquid water is present.

**Table 4**

| | Cell temp (°C) | Liquid Water | Pressure kPa (psig) | Voltage cycling type | Power Density at 0.6 volts (mW/cm²) | 90% Break-in time (h) | 75% Break-in Time (h) |
|---|---|---|---|---|---|---|---|
| Ex 15 | 70 | Yes | 0 (0) | Rapid | 601 | 2.2 | 0.7 |
| Ex 16 | 70 | No | 0 (0) | Rapid | 543 | 3.2 | 0.7 |
| Ex 17 | 80 | Yes | 103 (15) | Rapid | 696 | 0.58 | 0.21 |
| Ex 18 | 80 | No | 103 (15) | Rapid | 576 | 1.2 | 0.28 |

### Examples 19 - 20:

Another variation was used in these examples. The MEAs were first treated at 90°C with humidified N₂ on both the anode and cathode sides (also at a targeted dew point of 90°C) overnight, ∼ 14 hours. Then, the break-in procedure used in Example 1 was performed. The power density at 0.6 volts was higher than that of Comparative Example 1 , and the break-in times were less than one-tenth that of Comparative Example 1.

**Table 5**

| | Cell temp (°C) | Electrode Type | Pressure kPa (psig) | Voltage cycling type | Power Density at 0.6 volts (mW/cm²) | 90% Break-in time (h) | 75% Break-in Time (h) |
|---|---|---|---|---|---|---|---|
| Ex 19 | 70 | 5621 | 0 (0) | Slow | 601 | 0.75 | < 0.25 |
| Ex 20 | 70 | 5621 | 0 (0) | Slow | 610 | 0.75 | < 0.25 |

### Examples 21

In this example, a conditioning procedure after initial break-in is demonstrated. A cell was assembled using a 5621 MEA as described previously. The break-in and testing conditions were identical to Comparative Example 1, i.e. the break-in consisted of holding the voltage at 0.6 volts for 18 hours. The power density at 0.6 volts after break-in was found to be 601 mW/cm⁻². The cell was then held at 0.6 volts for 7.6 hours to simulate actual fuel cell operation. A polarization curve was then recorded. The power density was 629 mW/cm⁻². At this point, the conditioning procedure described in Example 8 was performed for 4 hours. A subsequent polarization curve immediately following this procedure gave a power density of 694 mW/cm⁻², an improvement of ∼10% from the power density before the conditioning was performed. Subsequently, the cell was again operated at a constant 0.6 volts for an additional ∼88 hours and the power density was observed to decrease, calculated to be 680 mW/cm⁻² after a polarization curve was obtained. At this point, another conditioning procedure identical to the first was performed. The power density was qualitatively observed to increase but it was not quantitatively measured using the Standard procedure. The cell was then held for 16 h, under 103 kPa (15 psig) at 80°C. It was then held at 0 kPa (0 psig), 0.6 volts, 70°C for an additional ∼25 hours, during which time 3 different polarization curves were taken. The average power density from these three polarization curves was 633 mW/cm⁻². Thus, after ∼175 hours of power production, the power density had decreased from an initial value of 694 mW/cm⁻² to 633 mW/cm⁻², indicating that the cell function was degrading with time. Finally, a conditioning identical to the first two was performed. The power density calculated from the polarization curve taken after the conditioning was 684 mW/cm⁻². This value is very close to the original fully broken-in value of 694 mW/cm⁻², which demonstrates the ability of the conditioning procedure to recover a significant fraction of the power lost when it is performed after some time of fuel cell operation.

## Claims

1. A method of conditioning a polymer electrolyte membrane fuel cell having an anode supplied with a fuel, and a cathode supplied with an oxidant comprising the following steps performed before operation of the fuel cell:
i. applying a first external load to said fuel cell, the first external load being selected to produce a first voltage, about 0.6 volts for a first period of time between about 5 seconds and about 120 seconds;
ii. removing the said first external load for a second period of time between about 5 seconds and about 120 seconds;
iii. applying a second external load to said fuel cell, the second external load being selected to produce a second voltage, about 0.3 volts for a third period of time between about 5 seconds and about 120 seconds;
iv. removing said second external load for a fourth period of time between about 5 seconds and 120 seconds; and
v. repeating steps i through iv at least twice.

2. The method of Claim 1 wherein the method of conditioning is applied to said fuel cell during the first about 24 hours of operation of said fuel cell.

3. The method of Claim 1 wherein the method of conditioning is applied to said fuel cell after about 24 hours of operation of said fuel cell.

4. The method of Claim 1 further comprising applying liquid water to the fuel cell during any of the process steps.

5. The method of Claim 1 further comprising the step of applying a fuel pressure of greater than about 108 kPa (one psig) to the anode of said polymer electrolyte membrane fuel cell, and applying an oxidant pressure similar to said fuel pressure to the cathode of said polymer electrolyte membrane fuel cell.

6. The method of Claim 1 further comprising maintaining the fuel cell at a temperature of between about 60°C and about 90°C during any of the process steps.

7. The method of Claim 1 further comprising repeating steps i through iv at least thrice.

8. The method of Claim 1 further comprising a fuel of hydrogen.

9. The method of Claim 1 further comprising a fuel of methanol.

## Patentansprüche

1. Konditionierungsverfahren für eine Polymer-Elektrolyt-Membran-Brennstoffzelle, die eine mit einem Brennstoff versorgte Anode und eine mit einem Oxidans versorgte Kathode aufweist, umfassend die folgenden, vor dem Betrieb der Brennstoffzelle durchgeführten Schritte:
i. Anlegen einer ersten externen Ladung an die Brennstoffzelle, wobei die erste externe Ladung ausgewählt wird, um eine erste Spannung von etwa 0,6 Volt für einen ersten Zeitraum von zwischen etwa 5 Sekunden und etwa 120 Sekunden zu erzeugen;
ii. Entfernen der ersten externen Ladung für einen zweiten Zeitraum von zwischen etwa 5 Sekunden und etwa 120 Sekunden;
iii. Anlegen einer zweiten externen Ladung an die Brennstoffzelle, wobei die zweite externe Ladung ausgewählt wird, um eine zweite Spannung von etwa 0,3 Volt für einen dritten Zeitraum von zwischen etwa 5 Sekunden und etwa 120 Sekunden zu erzeugen;
iv. Entfernen der zweiten externen Ladung für einen vierten Zeitraum von zwischen etwa 5 Sekunden und 120 Sekunden; und
v. mindestens zweimaliges Wiederholen der Schritte i bis iv.

2. Verfahren nach Anspruch 1, wobei das Konditionierungsverfahren während der ersten etwa 24 Stunden des Betriebs der Brennstoffzelle auf die Brennstoffzelle angewandt wird.

3. Verfahren nach Anspruch 1, wobei das Konditionierungsverfahren nach etwa 24 Stunden des Betriebs der Brennstoffzelle auf die Brennstoffzelle angewandt wird.

4. Verfahren nach Anspruch 1, ferner umfassend das Anwenden von flüssigem Wasser auf die Brennstoffzelle während jedes beliebigen der Verfahrensschritte.

5. Verfahren nach Anspruch 1, ferner umfassend den Schritt des Anwendens eines Brennstoffdrucks von mehr als etwa 108 kPa (1 psig) auf die Anode der Polymer-Elektrolyt-Membran-Brennstoffzelle und des Anwendens eines dem Brennstoffdruck ähnlichen Oxidansdrucks auf die Kathode der Polymer-Elektrolyt-Membran-Brennstoffzelle.

6. Verfahren nach Anspruch 1, ferner umfassend das Halten der Brennstoffzelle bei einer Temperatur von zwischen etwa 60 °C und etwa 90 °C während jedes beliebigen der Verfahrensschritte.

7. Verfahren nach Anspruch 1, ferner umfassend das mindestens dreimalige Wiederholen der Schritte i bis iv.

8. Verfahren nach Anspruch 1, ferner umfassend einen Wasserstoffbrennstoff.

9. Verfahren nach Anspruch 1, ferner umfassend einen Methanolbrennstoff.

## Revendications

1. Procédé de conditionnement d'une pile à combustible à membrane électrolytique polymère ayant une anode alimentée en un carburant et une cathode alimentée en un oxydant comprenant les étapes suivantes, effectuées avant la mise en opération de la pile à combustible :
i. appliquer une première charge externe à ladite pile à combustible, la première charge externe étant sélectionnée pour produire une première tension d'environ 0,6 volt durant une première période de temps comprise entre environ 5 secondes et environ 120 secondes;
ii. retirer ladite première charge externe durant une seconde période de temps comprise entre environ 5 secondes et environ 120 secondes;
iii. appliquer une seconde charge externe à ladite pile à combustible, la seconde charge externe étant choisie pour produire une seconde tension d'environ 0,3 volt durant une troisième période de temps comprise entre environ 5 secondes et environ 120 secondes;
iv. retirer ladite seconde charge externe durant une quatrième période de temps comprise entre environ 5 secondes et 120 secondes; et
v. répéter les étapes i à iv au moins deux fois.

2. Procédé selon la revendication 1, dans lequel le procédé de conditionnement est appliqué à ladite pile à combustible durant environ les premières 24 heures d'opération de ladite pile à combustible.

3. Procédé selon la revendication 1, dans lequel le procédé de conditionnement est appliqué à ladite pile à combustible après environ 24 heures d'opération de ladite pile à combustible.

4. Procédé selon la revendication 1, comprenant en outre l'application d'eau liquide à la pile à combustible durant l'une quelconque des étapes du procédé.

5. Procédé selon la revendication 1, comprenant en outre l'étape d'application d'une pression de combustible supérieure à environ 108 kPa (1 psig) à l'anode de ladite pile à combustible à membrane électrolytique polymère, et l'application d'une pression d'oxydant similaire à ladite pression de combustible à la cathode de ladite pile à combustible à membrane électrolytique polymère.

6. Procédé selon la revendication 1, comprenant en outre le maintien de la pile à combustible à une température comprise entre environ 60°C et environ 90°C durant l'une quelconque des étapes du procédé.

7. Procédé selon la revendication 1, comprenant en outre la répétition des étapes i à iv au moins trois fois.

8. Procédé selon la revendication 1, comprenant en outre un combustible d'hydrogène.

9. Procédé selon la revendication 1, comprenant en outre un combustible de méthanol.
